# FASCICULE DE BREVET EUROPEEN

(11) **EP 2 460 364 B1**
(45) Date de publication et mention de la délivrance du brevet: **14.02.2018**
(21) Numéro de dépôt: 10735011.8
(22) Date de dépôt: 26.07.2010
(51) Int. Cl.: H04Q 9/08, H04B 3/54, H05B 37/02, H04Q 9/00

(54) **MODULE DE GESTION DE CANDELABRES ET DE SERVICES ET SYSTEME DE TELEGESTION COMPORTANT AU MOINS UN TEL MODULE**
MODUL ZUR VERWALTUNG VON LATERNENMASTEN UND DIENSTEN SOWIE FERNVERWALTUNGSSYSTEM MIT MINDESTENS EINEM SOLCHEN MODUL
MODULE FOR MANAGING LAMPPOSTS AND SERVICES, AND TELEMANAGEMENT SYSTEM COMPRISING AT LEAST ONE SUCH MODULE

(30) Priorité: 27.07.2009 FR 0955232
(43) Date de publication de la demande: 06.06.2012
(73) Titulaire: Bouygues Energies & Services, 78180 Montigny Le Bretonneux (FR)
(72) Inventeur: BRAUD, Nicolas, F-92100 Boulogne Billancourt (FR); GUERY, Jean-Michel, F-78110 Le Vesinet (FR)
(74) Mandataire: Regimbeau
(86) Numéro de dépôt international: PCT/EP2010/060798
(87) Numéro de publication internationale: WO 2011/012573

(56) Documents cités:
- WO-A1-96/36202
- WO-A1-2009/103245
- FR-A1- 2 888 068
- US-A1- 2005 036 323
- CAPONETTO R ET AL: "Power consumption reduction in a remote controlled street lighting system" POWER ELECTRONICS, ELECTRICAL DRIVES, AUTOMATION AND MOTION, 2008. SPEEDAM 2008. INTERNATIONAL SYMPOSIUM ON, IEEE, PISCATAWAY, NJ, USA, 11 juin 2008 (2008-06-11), pages 428-433, XP031293399 ISBN: 978-1-4244-1663-9

## Description

### DOMAINE DE L'INVENTION

La présente invention concerne le domaine des réseaux d'éclairage.

Elle propose en particulier des modules de gestion de candélabres et de services reliés à un centre de commandement par un réseau électrique d'alimentation.

Elle propose également un système de télégestion comprenant un centre de commandement et un ou plusieurs modules de gestion de candélabres et de services reliés audit centre de commandement par le réseau électrique d'alimentation.

### ARRIERE PLAN DE L'INVENTION

La télégestion de l'éclairage public (collectivités urbaines, domaines privés) est un domaine technique en pleine expansion.

Notamment, la volonté de réaliser des économies d'énergie au niveau du réseau d'éclairage public et de réduire le coût de celui-ci conduit à rechercher des solutions pour optimiser la puissance électrique consommée par les candélabres.

Il est connu des systèmes de télégestion permettant la commande de l'éclairage public par courant porteur à bas débit.

Par ailleurs, le développement de nouvelles technologies de télésurveillance, de relève à distance de compteurs, de bornes wifi dans les villes, etc. rend nécessaire la mise à disposition de supports adéquats dans l'environnement urbain.
Les candélabres constituant un maillage relativement régulier d'une zone urbaine, il semble donc intéressant de les utiliser comme support pour ces nouveaux équipements.

On connait déjà par le document WO 96/36202 un dispositif de télégestion d'éclairage public avec une communication par courant porteur, en modulation de phase à une fréquence de 132 kHz, entre d'une part un poste central et d'autre part des dispositifs qui sont associés aux candélabres et qui commandent leurs lampes d'éclairage.

Ce document ne prévoit aucunement d'associer des services complémentaires au système de télégestion d'éclairage. Au contraire, un tel système utilisant une transmission par courant porteur en modulation de phase à une fréquence de 132 kHz est difficilement compatible avec la mise en oeuvre sur ce même réseau d'échanges de données au format IP. La mise en oeuvre de services complémentaires supposerait donc un réseau d'alimentation et de transmission d'information distinct et par conséquent des travaux de génie civil complémentaire.

Le document FR 2 888 068 propose quant à lui d'utiliser les candélabres reliés en grappe à une même armoire d'alimentation pour constituer un réseau communiquant et doter lesdits mâts d'éclairage d'un certain nombre de services. A cet effet, les mâts des candélabres sont équipés de routeur-commutateurs. La fonction de ces routeur-commutateurs est d'assurer la transmission de données binaires entre d'une part un réseau filaire à courant CPL réalisés en utilisant le réseau d'alimentation électrique des mâts et d'autre part différents équipements qui sont situés à proximité des candélabres et qui communiquent par technologie sans fil avec ces routeur-commutateurs.

On notera toutefois que dans un tel système, l'armoire d'alimentation doit maintenir les candélabres allumés pour que les services qui sont associés à leurs mâts puissent fonctionner. Le fonctionnement continu des services entraîne par conséquent l'allumage permanent de l'éclairage public.

Par ailleurs, on relèvera que ce document propose pour la technologie CPL, d'utiliser le standard Home Plug, qui a pour l'instant essentiellement été développé pour des installations de type appartement ou maison (« indoor »), c'est-à-dire pour de faibles distances, sans fonction de répétition du signal pour faire face aux distances à parcourir sur l'éclairage public, et avec une technologie non étanche.

Le document US 2005/0036323 décrit la possibilité d'utiliser une installation publique tel qu'un poteau de réverbère pour y loger des éléments actifs et passifs d'un réseau de communication. Pour cela, ce document propose un poteau de réverbère pouvant renfermer des éléments de réseau actifs et passifs ainsi que sur les modalités d'alimentation en énergie desdits éléments de réseau.

Le document Caponetto R et al., « Power consumption réduction in a remote controlled street lighting system », Power electronics, electrical drives, automation and motion, 2008 décrit quant à lui un équipement de contrôle à distance pour surveiller et gérer un système d'éclairage public.

Enfin, le document WO 2009/103245 décrit un réverbère à diode électroluminescente (DEL) qui comprend un modem PLC et un circuit de commande. Le réverbère à DEL peut recevoir des instructions de réglage en provenance d'une télécommande et effectuer un autoréglage sur la base d'informations d'état collectées par un circuit de diagnostic.

Un but de l'invention est de procurer une solution de télégestion de candélabres, qui puisse servir de support à une grande diversité d'équipements et de services.

Un autre but de l'invention est de proposer une solution facile et peu onéreuse à installer, tout en permettant une gestion indépendante d'une part de l'éclairage et d'autre part des équipements de service associés aux candélabres et installés sur le même réseau électrique (allumage/extinction, mais également gradation de l'éclairage, programmation, relevé de consommation, détection des pannes et envoi d'alertes, etc.).

Un autre but encore de l'invention est de proposer une solution qui permette de très facilement déplacer des équipements d'un candélabre à un autre, pour reconfigurer une zone sur laquelle on déploie un service donné.

Un autre but encore est de proposer une solution qui permette de transmettre des informations de façon sécurisée entre les candélabres et équipements de service déployés et des prestataires-utilisateurs à distance.

### BREVE DESCRIPTION DE L'INVENTION

L'invention propose notamment un module de gestion de candélabre relié à un réseau électrique d'alimentation, ledit module comportant une électronique qui comprend un injecteur/récepteur à courant porteur en ligne par lequel il est connecté au réseau électrique et qui lui permet de communiquer avec un centre de commandement pour recevoir notamment des instructions d'allumage/extinction du candélabre.

Ledit module a la particularité d'être apte à assurer également la gestion d'au moins un service complémentaire tel que vidéoprotection, sonorisation, bande Wifi, borne de recharge de véhicule électrique, etc.

La gestion qu'il assure pour le candélabre d'une part et celle qu'il assure pour le (ou les) service(s) complémentaire(s) sont indépendantes , ledit module comportant à cet effet :
- au moins deux sorties aptes à alimenter en puissance de façon indépendante la ou des lanterne(s) du candélabre et au moins un équipement de service associé au candélabre,
- au moins un port pour le branchement d'un câble informatique entre cet équipement et ledit module,
l'électronique étant disposée dans un boîtier et comportant :
- des moyens aptes à commander de façon indépendante les sorties d'alimentation en fonction des instructions transmises par courant porteur par le centre de commandement,
des moyens de traitement et/ou de transmission de données reliés d'une part au port et d'autre part à l'injecteur/récepteur à courant porteur, l'injecteur/récepteur à courant porteur étant du type à haut débit.

On comprend qu'un tel module permet à la fois la télégestion d'un éclairage de type éclairage public et l'intégration de différents services complémentaires. L'éclairage public et les services sont, grâce à un tel module, gérés de façon différenciée, notamment en termes d'extinction/programmation. Ceci permet en particulier des économies d'énergie, ainsi que l'amélioration des durées de vie des équipements.

La mise en place d'un tel module est en outre particulièrement aisée et peu onéreuse. Son installation ne nécessite aucuns travaux de génie civil.

Avantageusement, l'électronique peut comporter :
- une carte mère à injecteur/récepteur CPL qui comporte les moyens de traitement et de transmission de données et qui est reliée au port de branchement du câble informatique et
- une carte fille qui comporte les moyens aptes à commander les sorties d'alimentation, ladite carte fille dialoguant avec la carte mère à injecteur/récepteur CPL.

Le module peut quant à lui comporter, rapporté sur le boîtier :
- une première connectique pour un câble apte à assurer le branchement sur le disjoncteur du candélabre,
- une connectique d'alimentation pour un câble intégrant au moins deux gaines à deux fils pour l'alimentation indépendante de la ou des lanterne(s) du candélabre et d'un équipement de service,
- une connectique pour un câble à connecteur Ethernet.

Ces connectiques contribuent à permettre une installation aisée et modifiable.

Préférentiellement, l'électronique comporte des moyens pour générer au moins une tension de sortie pour la commande de la gradation de la lanterne d'un candélabre. Notamment, la connectique d'alimentation est apte à recevoir un câble intégrant outre les gaines à fils d'alimentation, au moins une gaine à deux fils recevant la tension de commande de gradation.

L'électronique du module peut en outre comporter des moyens pour le filtrage des perturbations CEM potentiellement générées par les ballasts des candélabres. On résout ainsi les éventuels problèmes de perturbation du haut débit due aux fortes fréquences des ballasts des candélabres.

Avantageusement également, l'électronique peut comporter des moyens de mesure de la consommation individuelle de la ou des lanterne(s) du candélabre et/ou d'un équipement de service associé. Notamment, les moyens de traitement et de transmission de données comportent par exemple des moyens pour traiter les consommations individuelles mesurées et ainsi faciliter la facturation des services aux prestataires utilisateurs en fonction de leur consommation réelle. Ils comportent également des moyens permettant de générer un signal d'alerte à destination du centre de commandement ou directement des utilisateurs lorsqu'une anomalie dans le fonctionnement de la ou les lanternes, d'un équipement de service et/ou du réseau électrique est détectée.

L'invention propose également un système de télégestion d'un éclairage public, caractérisé en ce qu'il comprend un centre de commandement d'un ensemble de candélabres et au moins un module de gestion installé dans, sur ou à proximité d'un candélabre et apte à assurer la gestion indépendante de l'éclairage du candélabre et d'au moins un service complémentaire, ledit module communiquant avec le centre de commandement par courant porteur en ligne à haut débit.

Notamment le centre de commandement peut échanger avec une unité de contrôle à distance du réseau, qui permet d'éviter les surcharges d'informations. Ladite unité de contrôle comporte des moyens pour transmettre, de façon sécurisée, des données IP vers des prestataires utilisateurs de services.

De façon particulièrement avantageuse, le centre de commandement est apte à détecter la connexion d'un nouvel équipement de service sur un module et comporte des moyens pour interroger ledit équipement lors d'une telle connexion et transmettre à une unité de contrôle des données d'identification comparées par l'unité de contrôle à des données mémorisées dans une base de données, afin de permettre l'authentification dudit équipement et ainsi sécuriser les accès.

### BREVE DESCRIPTION DES DESSINS

D'autres caractéristiques et avantages de l'invention ressortiront de la description détaillée qui va suivre, en référence aux figures annexées données à titre non limitatif et sur lesquelles :
La figure 1 illustre un système de télégestion conforme à un mode de réalisation de l'invention, avec au moins un module de gestion intégré dans un candélabre,
La figure 2 est une représentation schématique en perspective du boîtier et de la connectique d'un module de gestion conforme à un mode de réalisation de l'invention,
La figure 3 est une vue en coupe du module de gestion de la figure 2, et
La figure 4 est un schéma de principe du module de gestion des figures 2 et 3.

### DESCRIPTION DETAILLEE DE L'INVENTION

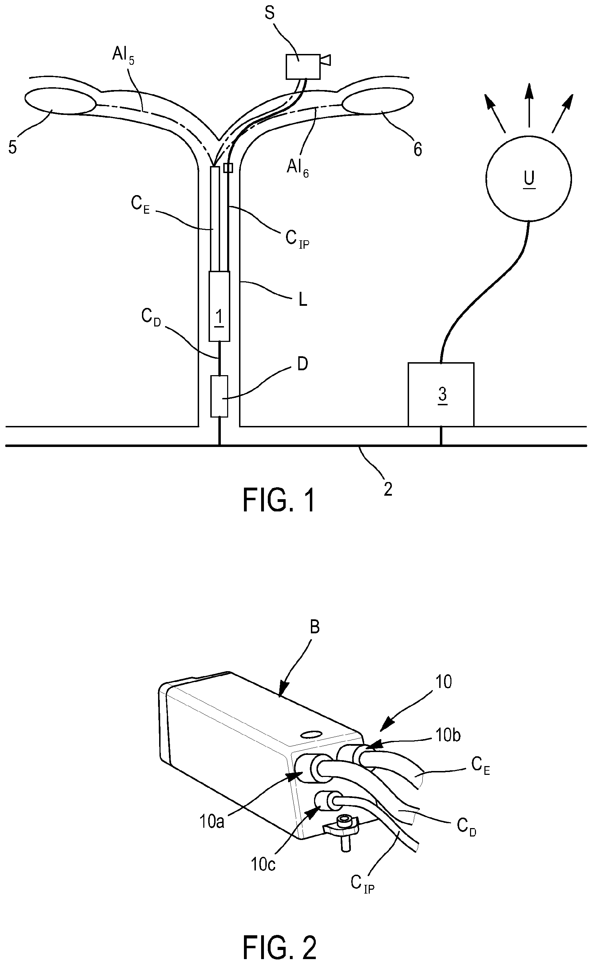

On a représenté sur la figure 1 un candélabre L comportant un disjoncteur D relié, avec d'autres candélabres L similaires (non représentés), à une armoire de commande et d'alimentation 3 par un réseau d'alimentation électrique 2.

A l'intérieur du candélabre L, sur celui-ci (par exemple au pied dudit candélabre L) ou à proximité immédiate, est installé un module de gestion 1 qui est connecté au réseau d'alimentation électrique 2 par branchement sur le disjoncteur D. Les ballasts des différentes lanternes 5, 6 du candélabre L (en l'occurrence, au nombre de deux), ainsi que un ou plusieurs équipements de service (dans l'exemple représenté, une caméra S) sont quant à eux branchés sur ce module 1 par différents câbles.

Comme l'illustre les figures 2 à 4, le module 1 se présente sous la forme d'un boitier B intégrant différentes connectiques 10.

En l'occurrence, le boîtier B intègre une connectique 10a permettant son branchement, au moyen d'un câble C_{D} d'alimentation à deux fils, sur le disjoncteur D.

Il comporte également une connectique 10b pour le branchement d'un câble C_{E} intégrant lui-même plusieurs paires de câbles. Par exemple, ce câble C_{E} peut intégrer au moins cinq gaines à paires de fils, dédiées respectivement à :
- l'alimentation de la première lanterne 5 (commande ON/OFF de celle-ci) (gaine Al5),
- l'alimentation de la deuxième lanterne 6 (commande ON/OFF de celle-ci) (gaine Al6),
- la gradation de l'éclairage du premier candélabre 5 (gradation 1-10 V) (gaine GRAD5),
- la gradation de l'éclairage du deuxième candélabre 6 (gradation 1-10 V) (gaine GRAD6), et
- l'alimentation électrique de l'équipement de service S (commande ON/OFF de cet équipement) (gaine AlS).

En variante, une seule paire de fils peut être utilisée pour l'alimentation/extinction et/ou la gradation de l'éclairage des deux lanternes.

Le boitier B comporte également une connectique 10c séparée pour une connexion informatique, typiquement pour le branchement d'un câble Ethernet C_{IP} muni d'une prise RJ45 ou RS 232.

Le boîtier B est un boitier étanche. Ses dimensions sont adaptées pour permettre au module 1 d'être inséré dans le mât du candélabre L, et fixé au mât par l'intermédiaire de moyens de fixation tels que des crochets et /ou un système de vis et d'écrous.

Typiquement, extérieurement, le boîtier a une longueur (pattes de fixation comprises) inférieure à 500 mm, ainsi qu'une largeur (hors tout) et une hauteur (hors vis) inférieures à 100 mm, par exemple 274 mm x 64 mm x 64 mm.

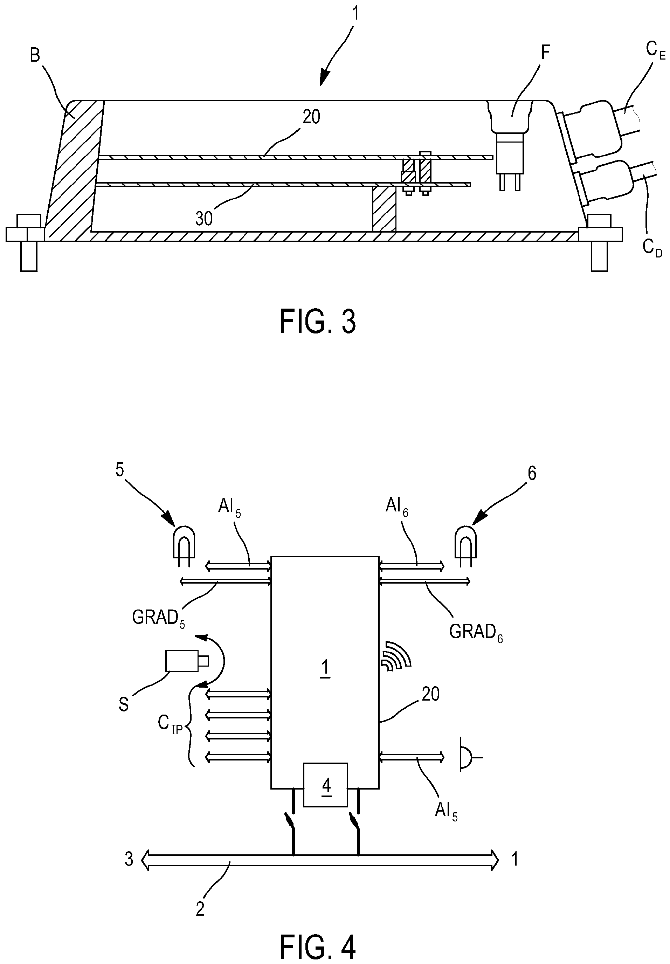

L'électronique à l'intérieur du boîtier B comporte une carte mère 20 (figure 3) adaptée pour permettre la communication entre le module 1 et le centre de commandement 3 par courant porteur en ligne CPL à haut débit 4 qui lui permet de décoder le signal reçu via le réseau électrique 2.

La technologie CPL consiste d'une manière générale à transmettre des informations par le biais du courant électrique.

Ces informations sont superposées au courant électrique à 220V (dont la fréquence est de 50 ou 60 Hz) sous la forme d'un signal à plus haute fréquence et de faible énergie.

Dans le cas de CPL à bas débit, on utilise des techniques de modulation de fréquence sur une bande comprise entre 9 et 150 kHz (en Europe).

Pour le CPL à haut débit, on utilise des modulations multi-porteuses dans une bande de 1,6 à 30 MHz.

Ledit module 1 fonctionne quant à lui à haut débit et donc adapté pour des services tels que vidéoprotection, sonorisation, bande Wifi, borne de recharge de véhicule électrique, et où le haut débit présente des avantages importants par rapport au réseau hertzien, notamment pour la vidéo.

Les composants de base d'un réseau CPL sont :
- un injecteur CPL qui réalise la superposition des informations sur le courant électrique, permettant ainsi la propagation du signal sur le réseau électrique ;
- un récepteur CPL situé sur ledit réseau électrique, et équipé d'un coupleur qui permet de supprimer les composantes basse fréquence et de traiter le signal haute fréquence.

Le récepteur CPL peut être un répéteur/récepteur CPL, par exemple un composant fourni par la société DS2 basé sur un protocole CPL fonctionnant au choix entre 2 et 34 MHz.

La carte mère 20 comporte un injecteur/répéteur/récepteur de ce type ainsi qu'un port Ethernet correspondant à la connectique 10c.

Elle est associée à une carte fille 30 qui commande les différentes alimentations ON/OFF de la ou des lanternes du candélabre ainsi que du ou des équipement(s) de service associé(s) à celui-ci. Elle commande en outre la gradation 1-10 V des ballasts des lanternes.

Elle comporte par ailleurs des moyens de métrologie qui lui permettent de mesurer les consommations individuelles des différentes lanternes et des différents équipements de service.

Cette carte fille 30 dialogue avec la carte mère 20 à laquelle elle est connectée et dont elle reçoit notamment les commandes pour l'alimentation et la gradation de l'éclairage ainsi que pour l'alimentation de l'équipement de service.

Elle transmet elle-même à la carte mère 20 des informations destinées à être renvoyées sur le centre de commandement que constitue l'armoire d'alimentation 3 à laquelle le module 1 est relié (relevé des consommations individuels des lanternes ou équipements de service, flux de données en provenance de ces derniers, etc...), ces informations étant elles-mêmes renvoyées le cas échéant, par des moyens de connexion internet classiques, sur une unité de contrôle U à distance du réseau (figure 1), qui elle-même traitera ces informations et les transmettra à différents destinataires (aux fins de facturation des services ou des consommations électriques par exemple).

L'unité de contrôle U permet en outre d'éviter toute surcharge d'informations au niveau du serveur de traitement du centre de commandement 3.

La carte fille 30 ou la carte mère 20 sont en outre adaptées pour évaluer l'état des lampes et équipements.

A cet effet, la carte fille 30 (ou la carte mère 20) compare les valeurs de consommation mesurée à des consommations théoriques attendues, et envoie des messages d'alerte au centre de commandement 3 si la consommation mesurée diffère de la consommation théorique attendue.

Des alertes sont alors envoyées au centre de commandement 3 qui les retransmet lui-même d'une part à l'unité centrale U, et d'autre part, à partir de cette unité centrale U, aux différents prestataires concernés, de préférence dans un langage SNMP.

Egalement, la carte fille 30 comporte à proximité immédiate de la connectique 10b un circuit F pour la filtration des CEM. Ce circuit est destiné à limiter les perturbations des signaux CPL que pourraient engendrer les ballasts des lampes.

On comprend qu'un tel module 1 s'installe particulièrement aisément par un système de type « plug and play ». Il suffit de relier sa connectique d'alimentation 10a au disjoncteur D du candélabre L, de relier les entrées d'alimentation et de gradation des ballasts des différentes lanternes à un câble du type du câble CE à cinq gaines à paires de fils lui-même branché sur la connectique 10b et enfin de brancher un câble Ethernet de l'équipement de service S à la prise d'un câble IP branché sur la connectique 10c.

Avec un tel module 1, les lanternes du candélabre L et son ou ses équipements de service (caméra S) sont commandées et alimentées de façon totalement indépendantes. Il devient donc possible de les alimenter séparément, selon des calendriers distincts, notamment selon que le service associé soit en temps réel (surveillance vidéo, etc.) ou décorrélé (éclairage, borne d'information touristiques, etc.).

Les instructions d'allumage / extinction sont communiquées au module 1 par le centre de commandement 3, soit ponctuellement, soit sous la forme d'un calendrier qui est transmis au module 1 par le centre de commandement 3 et stocké dans une mémoire du module 1. Cette dernière modalité permet de pallier d'éventuelles pannes du réseau de données.

Le calendrier comporte, pour une période de temps donnée (par exemple quelques jours), les horaires d'allumage et d'extinction des candélabres avec une gradation éventuelle.

Ces horaires peuvent varier en fonction du moment de la semaine (jour ouvré ou férié), de la saison, mais aussi en fonction d'événements prévus (par exemple, une affluence nocturne importante à l'occasion d'une rencontre sportive).

A intervalles réguliers (par exemple toutes les minutes), le module recherche dans le calendrier l'état (ou niveau de gradation) dans lequel il doit être.

Si l'état est différent de celui du module, alors une nouvelle commande de gradation est envoyée.

Si au bout d'un certain temps (par exemple plusieurs jours), l'état de gradation n'a pas changé, le module 1 envoie une alerte au centre de commandement 3.

On notera que l'armoire d'alimentation ou centre de commandement 3 comporte de son côté un serveur central qui mémorise les différents calendriers d'allumage / d'extinction des candélabres du réseau et qui les communique aux modules de gestion correspondants par l'intermédiaire du courant porteur en ligne à haut débit.

Pour ces échanges avec les modules 1, un tel centre de commandement est équipé d'un injecteur/répéteur/récepteur CPL haut débit qui permet de superposer le signal au courant électrique. Il s'agit par exemple d'un injecteur CPL standard équipé d'un microprocesseur 9002 ou 9503 de DS2.

On notera en outre que chaque module 1 peut être authentifié par interrogation par le centre de commandement 3 lors de sa mise en place dans ou sur un candélabre L.

Egalement, chacun des équipements de service S susceptible d'être utilisé sur le réseau 2 est déclaré dans une base de données interrogeable par l'unité externe U. Lorsque le centre de commande 3 détecte le branchement d'un équipement S, il interroge cet équipement afin qu'il fournisse une information d'identification individuelle. Les données ainsi récupérées sont comparées par le centre de commandement 3 et l'unité U pour authentification de l'équipement S par comparaison au contenu de la base de données.

Par ailleurs, on sait que les réseaux des différentes armoires électriques (ou centres de commandement 3) sont classiquement reliés entre eux par des réseaux de sécurité qui permettent de maintenir une alimentation, même en cas de coupure de l'alimentation principale de l'une des armoires 3. Cette infrastructure déjà en place peut être utilisée pour reconfigurer les grappes de candélabres L dépendant d'une armoire 3 (centre de commandement 3). Dans cette hypothèse, l'unité centrale U à laquelle les différentes armoires 3 sont reliées reprogramment celles-ci pour leur affecter une nouvelle liste de modules de gestion 1.

L'identification/authentification individuelle de chaque équipement S lors de sa connexion sur un module 1 permet de très facilement déplacer les équipements d'un candélabre L à un autre et ainsi de reconfigurer un service donné pour l'adapter aux besoins de la communauté urbaine, par simple déconnexion puis reconnexion de l'équipement S sur la prise réseau (RJ45 ou autre), puis déclaration de l'équipement S auprès du nouveau centre de commandement 3.

A titre d'exemple, on peut brancher sur le module une caméra IP installée au sommet du candélabre L destinée à la télésurveillance, par exemple du trafic routier et/ou de la sécurité dans les rues.

Un autre exemple de service IP est une sonorisation d'ambiance, également disposé sur le candélabre et permettant de recevoir des sons sur IP et de le diffuser sur haut-parleur.

Un autre exemple de service IP est une borne wifi, permettant de procurer aux passants un accès à Internet.

La connectique appropriée pour ces équipements est par exemple une prise RJ45.

Une autre possibilité est de brancher au module un système de télé-relève de compteurs (eau, électricité, gaz...) qui fonctionne par radiofréquence.

Ainsi, le module de gestion permet d'interroger des compteurs communicants situés à son voisinage (par exemple au moyen du protocole Wavenis), de trier et de stocker les données communiquées par les différents compteurs, et de les renvoyer au centre de commandement 3.

La connectique appropriée pour le système de télé-relève est par exemple une prise RS 232. Bien sûr, tout autre service IP peut être connecté au module de gestion.

Les équipements sont par ailleurs choisis de sorte à fonctionner correctement dans une plage de températures ambiantes comprises entre - 20 et +50°C.

Un autre exemple encore est la recharge de véhicule électrique sur bornes de recharge intégrées dans le paysage urbain aux pieds de lampadaires.

On notera, s'agissant de la connexion IP, que le module de gestion 1 peut ne comprendre qu'une connectique de connexion à un service IP. En effet, les candélabres étant rapprochés dans une localité ou sur une route, il n'est pas nécessaire que chacun d'eux porte une caméra pour la télésurveillance, un haut parleur pour la sonorisation, etc. Une répartition des services IP est donc tout à fait envisageable parmi un ensemble de candélabres adjacents. Typiquement, une caméra tous les 30 à 100 candélabres, un haut-parleur tous les 4 candélabres, 1 borne multimédia tous les 10 candélabres suffit pour satisfaire les besoin d'une localité.

Il va de soi que les exemples que l'on vient de donner ne sont que des illustrations particulières en aucun cas limitatives quant aux domaines d'application et aux fonctionnalités de l'invention.

## Revendications

1. Module de gestion (1) de candélabre (L) relié à un réseau électrique d'alimentation (2), ledit module (1) comportant une électronique qui comprend un injecteur/récepteur à courant porteur en ligne, ou CPL, par lequel il est connecté au réseau électrique et qui lui permet de communiquer avec un centre de commandement pour recevoir notamment des instructions d'allumage/extinction du candélabre, **caractérisé en ce que** ledit module est apte à assurer la gestion d'au moins un service complémentaire (S) et comporte à cet effet :
- au moins deux sorties aptes à alimenter en puissance de façon indépendante la ou des lanterne(s) (5, 6) du candélabre (L) et au moins un équipement de service (S) associé au candélabre (L),
- au moins un port pour le branchement d'un câble informatique entre cet équipement et ledit module,
l'électronique étant disposée dans un boîtier (B) apte à être intégré à l'intérieur du candélabre (L), sur celui-ci ou à proximité et comportant :
- des moyens (30) aptes à commander de façon indépendante les sorties d'alimentation en fonction des instructions transmises par courant porteur par le centre de commandement,
- des moyens de traitement et/ou de transmission de données (20) reliés d'une part au port et d'autre part à l'injecteur/récepteur à courant porteur, ledit injecteur/récepteur à courant porteur étant du type à haut débit.

2. Module (1) selon la revendication 1, **caractérisé en ce que** l'électronique comporte :
- une carte mère (20) à injecteur/récepteur CPL qui comporte les moyens de traitement et de transmission de données et qui est reliée au port de branchement du câble informatique et
- une carte fille (30) qui comporte les moyens aptes à commander les sorties d'alimentation, ladite carte fille (30) dialoguant avec la carte mère (20) à injecteur/récepteur CPL.

3. Module selon l'une des revendications précédentes, **caractérisé en ce qu'**il comporte, rapporté sur le boîtier (B),
- une première connectique (10a) pour un câble apte à assurer le branchement sur le disjoncteur du candélabre (L),
- une connectique d'alimentation (10b) pour un câble intégrant au moins deux gaines à deux fils (Al5, Al6, AlS) pour l'alimentation indépendante de la ou des lanterne(s) (5, 6) du candélabre (L) et d'un équipement de service (S),
- une connectique (10c) pour un câble à connecteur Ethernet.

4. Module (1) selon l'une des revendications précédentes, **caractérisé en ce que** l'électronique comporte en outre des moyens (GRAD5, GRAD6) pour générer au moins une tension de sortie pour la commande de la gradation de la lanterne (5, 6) d'un candélabre (L).

5. Module (1) selon les revendications 3 et 4 prises en combinaison, **caractérisé en ce que** la connectique d'alimentation est apte à recevoir un câble intégrant outre les gaines à fils d'alimentation, au moins une gaine à deux fils recevant la tension de commande de gradation.

6. Module (1) selon l'une des revendications précédentes, **caractérisé en ce que** son électronique comporte des moyens (F) pour le filtrage des perturbations CEM potentiellement générées par les ballasts des candélabres (L).

7. Module (1) selon l'une des revendications précédentes, **caractérisé en ce que** l'électronique comporte des moyens de mesure de la consommation individuelle de la ou des lanterne(s) (5, 6) du candélabre (L) et/ou d'un équipement de service (S) associé.

8. Module (1) selon la revendication 7, **caractérisé en ce que** les moyens de traitement et de transmission de données comportent des moyens pour traiter les consommations individuelles mesurées et générer un signal d'alerte à destination du centre de commandement lorsqu'une anomalie dans le fonctionnement de la ou des lanternes (5, 6) du candélabre (L), des équipements de service (S) et/ou du réseau électrique est détectée.

9. Module selon l'une des revendications précédentes, **caractérisé en ce qu'**il comporte une mémoire pour enregistrer un calendrier d'allumage/extinction du candélabre (L) et/ou des services (S) communiqué audit module par le centre de commandement.

10. Module (1) selon l'une des revendications précédentes, **caractérisé en ce que**, pour son intégration à l'intérieur d'un candélabre (L), le boîtier (B) a une longueur inférieure à 500 mm, ainsi qu'une largeur et une hauteur inférieures à 100 mm.

11. Module (1) selon l'une des revendications précédentes, **caractérisé en ce que** l'injecteur/récepteur a également une fonction de répéteur.

12. Système de télégestion d'un éclairage public, **caractérisé en ce qu'**il comprend un centre de commandement (3) d'un ensemble de candélabres (L) et au moins un module de gestion (1) selon l'une des revendications précédentes installé dans, sur ou à proximité d'un candélabre (L) et apte à assurer la gestion indépendante de l'éclairage du candélabre (L) et d'au moins un service (S) complémentaire, ledit module communiquant avec le centre de commandement (3) par courant porteur en ligne à haut débit.

13. Système selon la revendication 12, **caractérisé en ce que** le centre de commandement (3) échange avec une unité de contrôle (U) à distance du réseau, ladite unité de contrôle (U) comportant des moyens pour transmettre, de façon sécurisée, des données IP vers des prestataires utilisateurs de services (S).

14. Système selon la revendication 12, **caractérisé en ce que** le centre de commandement (3) est apte à détecter la connexion d'un nouvel équipement de service (S) sur un module (1) et comporte des moyens pour interroger ledit équipement lors d'une telle connexion et transmettre à une unité de contrôle (U) des données d'identification comparées par l'unité de contrôle (U) à des données mémorisées dans une base de données, afin de permettre l'authentification dudit équipement (S).

## Patentansprüche

1. Modul zur Verwaltung (1) von Laternenmast (L), verbunden mit einem elektrischen Versorgungsnetz (2), wobei das Modul (1) eine Elektronik aufweist, die einen Einspeiser/Empfänger mit Powerline Communication, oder PLC, umfasst, mit dem es mit dem Stromnetz verbunden ist und der es ihm erlaubt, mit einem Steuerzentrale zu kommunizieren, um vor allem Befehle zum Einschalten/Ausschalten des Laternenmasts zu erhalten,
**dadurch gekennzeichnet, dass** das Modul imstande ist, die Verwaltung mindestens eines komplementären Services (S) zu sichern und zu diesem Zweck aufweist:
- mindestens zwei Ausgänge, die imstande sind, die Leuchte(n) (5, 6) des Laternenmasts (L) und mindestens eine dem Laternenmast (L) zugeordnete Serviceausrüstung (S) unabhängig mit Leistung zu versorgen,
- mindestens einen Port für den Anschluss eines EDV-Kabels zwischen dieser Ausrüstung und dem Modul,
wobei die Elektronik in einem Gehäuse (B) angeordnet ist, das imstande ist, im Innern des Laternenmasts (L), auf diesem oder in der Nähe integriert zu sein und aufweist:
- Mittel (30), die imstande sind, die Versorgungsausgänge in Abhängigkeit von den vom PLC übertragenen Befehle der Steuerzentrale unabhängig zu steuern,
- Datenverarbeitungs- und/oder -übertragungsmittel (20), die zum einen mit dem Port und zum anderen mit dem PLC-Einspeiser/Empfänger verbunden sind, wobei der PLC-Einspeiser/Empfänger vom Hochleistungstyp ist.

2. Modul (1) nach Anspruch 1, **dadurch gekennzeichnet, dass** die Elektronik aufweist:
- ein Motherboard (20) mit PLC-Einspeiser/Empfänger, das die Datenverarbeitungs- und -übertragungsmittel aufweist und das mit dem Anschlussport des EDV-Kabels verbunden ist und
- eine Tochterkarte (30), die die Mittel aufweist, die imstande sind, die Versorgungsausgänge zu steuern, wobei die Tochterkarte (30) mit dem Motherboard (20) mit PLC-Einspeiser/Empfänger im Dialog steht.

3. Modul nach einem der vorangehenden Ansprüche, **dadurch gekennzeichnet, dass** es auf dem Gehäuse (B) angebracht aufweist:
- eine erste Anschlusstechnik (10a) für ein Kabel, das imstande ist, den Anschluss an den Trennschalter des Laternenmasts (L) zu gewährleisten,
- eine Versorgungsanschlusstechnik (10b) für ein Kabel, das mindestens zwei Mäntel mit zwei Drähten (AI5, AI6, AIS) für die unabhängige Versorgung der Leuchte(n) (5, 6) des Laternenmasts (L) und einer Serviceausrüstung (S) integriert,
- eine Anschlusstechnik (10c) für ein Kabel mit Ethernetverbinder.

4. Modul (1) nach einem der vorangehenden Ansprüche, **dadurch gekennzeichnet, dass** die Elektronik ferner Mittel (GRAD5, GRAD6) aufweist, um mindestens eine Ausgangsspannung für die Steuerung der Abstufung der Leuchte (5, 6) eines Laternenmasts (L) zu erzeugen.

5. Modul (1) nach den Ansprüchen 3 und 4, herangezogen in Kombination, **dadurch gekennzeichnet, dass** die Versorgungsanschlusstechnik imstande ist, ein Kabel aufzunehmen, das neben den Mänteln mit Versorgungsdrähten mindestens einen Mantel mit zwei Drähten integriert, die die Abstufungssteuerspannung empfangen.

6. Modul (1) nach einem der vorangehenden Ansprüche, **dadurch gekennzeichnet, dass** seine Elektronik Mittel (F) zum Filtern der CEM-Störungen aufweisen, die von den Vorschaltgeräten der Laternenmasten (L) erzeugt werden.

7. Modul (1) nach einem der vorangehenden Ansprüche, **dadurch gekennzeichnet, dass** die Elektronik Messmittel des individuellen Verbrauchs der Leuchte(n) (5, 6) des Laternenmasts (L) und/oder einer zugeordneten Serviceausrüstung (S) aufweist.

8. Modul (1) nach Anspruch 7, **dadurch gekennzeichnet, dass** die Datenverarbeitungs- und -übertragungsmittel Mittel zur Verarbeitung der gemessenen individuellen Verbräuche und zum Erzeugen eines Warnsignals an die Steuerzentrale aufweisen, wenn eine Anomalie beim Betrieb der Leuchte (n) (5, 6) des Laternenmasts (L), der Serviceausrüstungen (S) und/oder des Stromnetzes festgestellt wird.

9. Modul nach einem der vorangehenden Ansprüche, **dadurch gekennzeichnet, dass** es einen Speicher aufweist, um einen Einschalt-/Ausschaltzeitplan des Laternenmasts (L) und/oder der an das Modul von der Steuerzentrale kommunizierten Services (S) zu speichern.

10. Modul (1) nach einem der vorangehenden Ansprüche, **dadurch gekennzeichnet, dass** das Gehäuse (B) für seine Integration in das Innere eines Laternenmasts (L) eine Länge unter 500 mm sowie eine Breite und eine Höhe unter 100 mm hat.

11. Modul (1) nach einem der vorangehenden Ansprüche, **dadurch gekennzeichnet, dass** der Einspeiser/Empfänger ebenfalls eine Verstärkerfunktion hat.

12. System zur Fernverwaltung einer öffentlichen Beleuchtung, **dadurch gekennzeichnet, dass** es eine Steuerzentrale (3) einer Einheit von Laternenmasten (L) und mindestens ein Verwaltungsmodul (1) nach einem der vorangehenden Ansprüche umfasst, das im, auf oder in der Nähe eines Laternenmasts (L) installiert und imstande ist, die unabhängige Verwaltung der Beleuchtung des Laternenmasts (L) und mindestens eines komplementären Services (S) zu gewährleisten, wobei das Modul mit der Steuerzentrale (3) mittels Hochleistungs-PLC kommuniziert.

13. System nach Anspruch 12, **dadurch gekennzeichnet, dass** die Steuerzentrale (3) mit einer Fernkontrolleinheit (U) des Netzes austauscht, wobei die Kontrolleinheit (U) Mittel aufweist, um abgesichert IP-Daten an nutzende Serviceprovider (S) zu übertragen.

14. System nach Anspruch 12, **dadurch gekennzeichnet, dass** die Steuerzentrale (3) imstande ist, den Anschluss einer neuen Serviceausrüstung (S) an ein Modul (1) zu ermitteln und Mittel aufweist, um die Ausrüstung bei einem derartigen Anschluss zu befragen und an eine Kontrolleinheit (U) Identifikationsdaten zu übertragen, die von der Kontrolleinheit (U) mit Daten verglichen werden, die in einer Datenbank gespeichert sind, um die Authentifizierung der Ausrüstung (S) zu erlauben.

## Claims

1. A management module (1) for lamppost (L) connected to an electric power supply network (2), said module (1) including electronics which comprises a power line carrier current injector/receiver, or PLC, through which it is connected to the electric network and which allows it to communicate with a control center for notably receiving instructions for switching on/off the lamppost,
**characterized in that** said module is able to ensure management of at least one additional service (S) and includes for this purpose:
- at least two outputs capable of providing power independently to the lantern(s) (5, 6) of the lamppost (L) and to at least one piece of service equipment (S) associated with the lamppost (L),
- at least one port for connecting a computer cable between this piece of equipment and said module,
the electronics being positioned in a casing (B) capable of being integrated inside the lamppost (L), thereon or near and including:
- means (30) capable of controlling independently the power supply outputs according to instructions transmitted by the carrier current by the control center,
- means for processing and/or transmitting data (20) connected to the port on the one hand and to the carrier current injector/receiver on the other hand, said carrier current injector/receiver being of the type with a high throughput.

2. The module (1) according to claim 1, **characterized in that** the electronics includes:
- a motherboard (20) with a PLC injector/receiver which includes the data processing and transmitting means and which is connected to the port for connecting the computer cable, and
- a daughterboard (30) which includes means capable of controlling the power supply output, said daughterboard (30) conversing with the motherboard (20) having a PLC injector/receiver.

3. The module according to one of the preceding claims, **characterized in that** it includes, added on the casing (B),
- a first connection (10a) for a cable capable of ensuring the connection on the circuit breaker of the lamppost (L),
- a power supply connection (10b) for a cable integrating at least two sheaths with two wires (AI5, AI6, AIS) for the power supply independently of the lantern(s) (5, 6) of the lamppost (L) and of a piece of service equipment (S),
- a connection (10c) for an Ethernet connector cable.

4. The module (1) according to one of the preceding claims, **characterized in that** the electronics further includes means (GRAD5, GRAD6) for generating at least one output voltage for controlling the dimming of the lantern (5, 6) of a lamppost (L).

5. The module (1) according to claims 3 and 4 taken as a combination, **characterized in that** the power supply connection is capable of receiving a cable further integrating the sheaths with power supply wires, at least one sheath with two wires receiving the dimming control voltage.

6. The module (1) according to one of the preceding claims, **characterized in that** its electronics includes means (F) for filtering EMC perturbations potentially generated by the ballasts of the lampposts (L).

7. The module (1) according to one of the preceding claims, **characterized in that** the electronics includes means for measuring the individual consumption of the lantern(s) (5, 6) of the lamppost (L) and/or of an associated piece of service equipment (S).

8. The module (1) according to claim 7, **characterized in that** the data processing and transmission means include means for processing the measured individual consumptions and generating an alert signal intended for the control center when an abnormality is detected in the operation of the lantern(s) (5, 6) of the lamppost (L), of the service equipment (S) and/or of the electric network.

9. The module according to one of the preceding claims, **characterized in that** it includes a memory for recording a timetable for switching on/off the lamppost (L) and/or the services (S), communicated to said module by the control center.

10. The module (1) according to one of the preceding claims, **characterized in that**, for its integration inside a lamppost (L), the casing (B) has a length of less than 500 mm, as well as a width and a height of less than 100 mm.

11. The module (1) according to one of the preceding claims, **characterized in that** the injector/receiver also has a repeater function.

12. A system for telemanagement of public lighting, **characterized in that** it comprises a center (3) for controlling a set of lampposts (L) and at least one management module (1) according to one of the preceding claims, installed in, on or in proximity to a lamppost (L) and capable of ensuring independent management of the lighting of the lamppost (L) and of at least one additional service (S), said module communicating with the control center (3) through a high throughput power line carrier current.

13. The system according to claim 12, **characterized in that** the control center (3) exchanges with a remote control unit (U) of the network, said control unit (U) including means for securely transmitting IP data towards providers/users of services (S).

14. The system according to claim 12, **characterized in that** the control center (3) is capable of detecting the connection of a new piece of service equipment (S) on a module (1) and includes means for querying said piece of equipment upon such a connection and transmitting to a control unit (U) identification data compared by the control unit (U) with data stored in memory in a database, in order to allow authentication of said equipment (S).
